# FASCICULE DE BREVET EUROPEEN

(11) **EP 2 675 611 B1**
(45) Date de publication et mention de la délivrance du brevet: **20.04.2016**
(21) Numéro de dépôt: 12707864.0
(22) Date de dépôt: 06.02.2012
(51) Int. Cl.: B29C 70/44, B29C 70/54, F03D 1/06

(54) **COMPLEXE MULTICOUCHE ET SON UTILISATION POUR LA FABRICATION DE PIECES EN MATERIAU COMPOSITE.**
MEHRSCHICHTIGER KOMPLEX UND SEINE VERWENDUNG ZUR HERSTELLUNG VON TEILEN AUS EINEM VERBUNDWERKSTOFF.
MULTILAYER COMPLEX AND USE THEREOF FOR MANUFACTURING PARTS MADE OF A COMPOSITE MATERIAL.

(30) Priorité: 14.02.2011 FR 1151200
(43) Date de publication de la demande: 25.12.2013
(73) Titulaire: Diatex, 69230 Saint Genis Laval (FR)
(72) Inventeur: DE MULATIER, Bernard, F-69007 Lyon (FR)
(74) Mandataire: Cabinet Laurent & Charras
(86) Numéro de dépôt international: PCT/FR2012/050247
(87) Numéro de publication internationale: WO 2012/110728

(56) Documents cités:
- FR-A1- 2 676 960
- FR-A1- 2 868 008
- US-A1- 2009 273 111

## Description

### DOMAINE DE L'INVENTION

L'invention concerne un complexe multicouche comprenant un tissu d'arrachage et une membrane microporeuse, pour le moulage sous vide de pièces en matériau composite.

Les domaines d'utilisation de la présente invention incluent notamment l'industrie aéronautique, la fabrication de pales d'éoliennes, de coques de bateaux, ou de pièces automobiles.

### ETAT ANTERIEUR DE LA TECHNIQUE

Un matériau composite comprend au moins un matériau fibreux et un matériau liquide dont l'association permet d'obtenir un complexe dont les propriétés surpassent celles des matériaux de départ. Ainsi, les pièces en matériau composite présentent de nombreux avantages liés notamment à leurs propriétés de résistance, légèreté et facilité de mise en forme. Ces pièces peuvent être réalisées par moulage sous vide ou par infusion sous vidé.

En général, ces techniques consistent essentiellement à diffuser, de manière uniforme, de la résine à l'intérieur d'un renfort fibreux ayant la forme de la pièce à fabriquer. Après évacuation des gaz et répartition de la résine, cette dernière est réticulée pour donner une pièce en matériau composite.

Le document FR 2 868 008 A1 du Demandeur décrit la fabrication par moulage sous vide d'une pièce en matériau composite imprégné d'une résine polymère. Le moulage est facilité par l'utilisation d'un complexe multicouche conformément aux préambules des revendications 1 et 11, notamment lors de la mise sous vide du renfort fibreux et de la répartition uniforme de la résine.

Le complexe multicouche décrit dans FR 2 868 008 A1 comprend successivement un tissu d'arrachage, un film perméable aux gaz, et un feutre de drainage. Le tissu d'arrachage permet de structurer la surface de la pièce en matériau composite alors que le feutre drainant et le film perméable aux gaz permettent d'homogénéiser l'évacuation des gaz. Le film perméable aux gaz est un film tricouche perforé qui présente une couche supérieure venant en contact avec le textile jouant le rôle de feutre de drainage, une couche centrale et une couche inférieure venant, en contact avec le tissu d'arrachage. Il est à noter que le tissu d'arrachage et la résine sont incompatibles chimiquement et que le film perméable aux gaz n'est pas totalement imperméable à la résine. En effet, ce film est perfore mécaniquement et présente donc des trous dont les dimensions ne permettent pas de retenir la résine intégralement.

Ce complexe présente néanmoins l'avantage de pouvoir être retiré par délaminage' en retirant successivement le feutre avec le film, et le tissu d'arrachage.

Bien que satisfaisante, l'utilisation de ce complexe multicouche peut s'avérer trop consommatrice de résine avec les nouvelles générations de fibres imprégnées, à cause de sa membrane perforée, ce qui peut affecter les performances mécaniques du matériau composite. De plus, il implique un surcoût car il met en oeuvre une quantité de résine plus importante que la quantité nécessaire, le film tricouche perforé pouvant facilement laisser passer la résine.

L'utilisation d'une membrane micro-poreuse dans un procédé de moulage sous vide est par ailleurs connue du document US 2009 273 111 A1.

### EXPOSE DE L'INVENTION

Le Demandeur a mis au point un complexe multicouche pour le moulage sous vide de pièces en matériau composite, présentant une grande facilité, d'utilisation et permettant de réduire la quantité de résine utilisée.

Plus précisément, la présente invention concerne un complexe multicouche, pour le moulage sous vide d'une pièce en composite à base d'un renfort fibreux et d'une résine polymère, conformément à la revendication 1.

Pour plus de clarté, par gaz, on entend tout gaz, qu'il soit lourd ou léger mais aussi tout composé sous forme gazeuse.

De manière avantageuse, le complexe multicouche selon la présente invention présente une épaisseur comprise entre 130 et 270 µm, et plus avantageusement entre 180 et 210 µm.

De manière générale, une pièce composite est préparée par mise en oeuvre d'un renfort fibreux et d'une résine. Ce renfort est avantageusement en carbone ou en fibres de verre. Il peut notamment s'agir d'un renfort pré-imprégné de résine.

Les pré-imprégnés pouvant être utilisés dans le cadre de l'invention présentent généralement un ratio fibre/résine (en poids) compris entre 50/50 et 90/10. Ce ratio est plus généralement de l'ordre de 70/30.

La résine est avantageusement une résine thermodurcissable polymère dont la réticulation se fait à température ambiante ou à température élevée. Dans le cas particulier des pré-imprégnés, la réticulation est généralement obtenue entre 150 et 200°C.

Afin de mieux comprendre la portée de l'invention et le rôle du complexe multicouche et de ses composants lors du moulage sous vide d'une pièce en matériau composite, il est nécessaire de brièvement définir les étapes du moulage sous vide :
- formation dans une moule de l'ébauche de la pièce en matériau composite ; l'ébauche comprenant un renfort fibreux et de la résine ;
- habillage du renfort fibreux avec un complexe multicouche ;
- éventuellement, lorsqu'il n'en comprend pas, mise en place d'un feutre drainant sur le complexe multicouche ;
- mise en place d'un film de mise sous vide, par dessus le complexe multicouche ou, le cas échéant, sur le feutre drainant ;
- mise en place d'un mastic d'étanchéité entre le moule et le film de mise sous vide.
- évacuation des gaz ;
- réticulation de la résine ;
- arrachage du film de mise sous vide et, le cas échéant, du feutre drainant
- arrachage du complexe multicouche.

Contrairement aux films perforés de l'art antérieur, le caractère microporeux de la membrane du complexe multicouche selon la présente invention provient de sa fabrication et non d'une transformation ultérieure par perforation mécanique. Les pores de la membrane microporeuse de l'invention présentent un diamètre bien inférieur à celui des pores obtenus par perforation des membranes de l'art antérieur. Par ailleurs, ces pores ne sont pas forcément traversant, donnant ainsi un caractère quasi imperméable à la résine, qui demeure néanmoins perméable aux gaz.

Dans le cadre de l'invention, la membrane microporeuse au moins perméable aux gaz peut être avantageusement à base d'un polymère choisi dans le groupe comprenant les polyoléfines, les polyuréthanes (PU), et les fluoropolymères. Dans un mode de réalisation préféré, la membrane est en polyéthylène ou en polytétrafluoroéthylène (PTFE). Elle est encore plus avantageusement en polyéthylène.

Par l'expression « au moins perméable aux gaz », on entend que la membrane microporeuse est perméable aux gaz mais elle n'est pas nécessairement perméable à la résine. De manière avantageuse, lorsque la membrane microporeuse, est mise sous vide, sa microporosité permet l'évacuation des gaz, ainsi que notamment l'évaporation des solvants résiduels. La résine est quasi complètement retenue par la membrane microporeuse. Néanmoins, il est possible qu'une fraction infime de la résine passe à travers la membrane microporeuse. Cependant, dans un mode de réalisation avantageux, la membrane microporeuse reste imperméable à la résine.

La membrane présente une perméabilité moyenne aux gaz supérieure à 1 litre/m²/s sous 2000 Pa. Elle est avantageusement supérieure à 2.8 L/m²/s sous 2000 Pa.

La membrane microporeuse présente une densité de pores comprise entre 2 milliards et 8 milliards de pores/cm³, et les pores de la membrane microporeuse présentent un diamètre moyen inférieur à 20 µm, et encore plus avantageusement inférieur à 6 µm. La membrane comprend généralement des pores présentant des diamètres comprise entre 1 est 20 µm. Dans un mode de réalisation particulier, les pores de la membrane microporeuse présentent un diamètre moyen compris entre 1 et 5 µm. Ainsi, la densité des pores est telle que le volume de la membrane microporeuse comprend de 30 à 80 % de vide.

En outre, la membrane microporeuse présente une épaisseur préférentiellement comprise entre 20 et 100 µm, et encore plus préférentiellement entre 30 et 50 µm.

Lors de la mise sous vide, la résine est répartie de manière homogène et imprègne, le tissu d'arrachage. Elle est presque intégralement retenue par la membrane microporeuse. En d'autres termes, la résine est bloquée à l'intérieur du tissu d'arrachage, même s'il est possible que des traces de résine passent à travers la membrane microporeuse.

La membrane microporeuse est perméable aux gaz et quasi imperméable à la résine, elle est donc quasi semi-perméable. Ses propriétés dépendent des conditions dans lesquelles elle est fabriquée. En effet, les pores de la membrane ne sont pas nécessairement traversant. La perméabilité aux gaz est obtenue notamment grâce aux interstices formés entre les pores lors de la fabrication de la membrane.

Le complexe multicouche selon la présente invention permet ainsi de retenir l'essentiel de la résine lors du moulage. Cela permet donc de limiter les pertes en résine et donc d'utiliser des quantités moindres par rapport aux techniques ou complexes multicouches de l'art antérieur.

Comme déjà mentionné, le complexe multicouche de l'invention comprend une membrane microporeuse associée à un tissu d'arrachage. Différents moyens d'association peuvent être envisagés, dans la limite où la perméabilité globale de la membrane n'est pas substantiellement modifiée. Ainsi, la membrane microporeuse et le tissu d'arrachage peuvent avantageusement être associés par collage par points de collé. La densité des points de colle est telle que les points de colle sont positionnés de manière à ce que leurs centres soient espacés de 1 à 5 mm, et à ce que la surface occupée par lesdits points de colle représente de 10 à 50 % et plus avantageusement de 10 à 30 % de la surface de la membrane microporeuse. La densité des points de colle est généralement comprise entre 30 et 180 points de collé par cm² de la surface de la membrane microporeuse. Par ailleurs, la quantité de colle représente avantageusement entre 5 et 20 g sur un tissu de 80 à 85 g.

La colle est avantageusement choisie dans le groupe comprenant notamment les colles thermofusibles (hot-melt), polyuréthanes, et acryliques.

Le tissu d'arrachage du complexe multicouche selon la présente invention permet notamment de structurer la surface de la pièce composite après arrachage, en particulier pour faciliter l'accrochage de couches déposées ultérieurement telles que colle, peinture... Il permet également d'arracher la membrane avec laquelle il est associé par collage par points.

Pour éviter toute compatibilité avec la résine, le tissu d'arrachage est avantageusement à base de fibres de polyester, ou de fibres de polyamide. En effet, lors du retrait du tissu d'arrachage, la pièce en matériau composite sera détériorée si le tissu d'arrachage et la résine sont compatibles.

L'arrachage du complexe multicouche selon la présente invention crée une structure sur la pièce composite qui présente ainsi des propriétés d'adhérence améliorées.

Par ailleurs, dans un mode de réalisation particulier, le complexe multicouche selon la présente invention comprend un feutre drainant venant en contact avec la membrane, et associé à la membrane par collage. Le feutre drainant est préférentiellement en polyester ou en polyamide non tissé. Le grammage du feutre drainant peut être compris entre 20 et 400 g/m², il est avantageusement de l'ordre de 150 g/m².

L'association du feutre drainant et de la membrane microporeuse est avantageusement réalisée come décrit précédemment pour l'association entre la membrane microporeuse, et le tissu d'arrachage.

Dans ce cas particulier, le complexe multicouche comprend un tissu d'arrachage, une membrane microporeuse et un feutre drainant. Ainsi, il présente une épaisseur supérieure à telle indiquée précédemment.

La présente invention.concerne également un procédé de fabrication par moulage sous vide d'une pièce en un matériau composite imprégné d'une résine polymère, conformément à la revendication 11.

Il est à noter que la mise en place du mastic d'étanchéité peut également être réalisée préalablement à celle du film de mise sous vide.

Ce procédé peut donc comprendre les étapes de mise en place et de retrait d'un feutre drainant sur le complexe multicouche, lorsque ce dernier n'en comprend pas.

Bien entendu, le complexe multicouche est positionné de manière à ce que le tissu d'arrachage soit en regard de l'ébauche de la pièce en matériau composite.

Selon un mode de réalisation particulier, le complexe multicouche comprend un feutre drainant associé à la membrane microporeuse par collage par points de colle. Le complexe multicouche comprend successivement le tissu d'arrachage, la membrane microporeuse, et le feutre drainant.

Dans ce procédé, les étapes d'évacuation des gaz et de réticulation de la résine peuvent être simultanées. En effet, la résine peut éventuellement commencer à réticuler avant ou pendant l'évacuation des gaz. Elle est avantageusement réticulée après évacuation des gaz.

Ce procédé comprend notamment une étape consistant à retirer le tissu d'arrachage, afin d'obtenir la pièce en un matériau composite. Cette pièce en matériau composite présente ainsi une surface structurée, le tissu d'arrachage laissant son empreinte.

L'invention et les avantages qui en découlent ressortiront mieux des figures et exemples suivants donnés pour illustrer l'invention et de manière non limitative.

### DESCRIPTION SOMMAIRE DES FIGURES

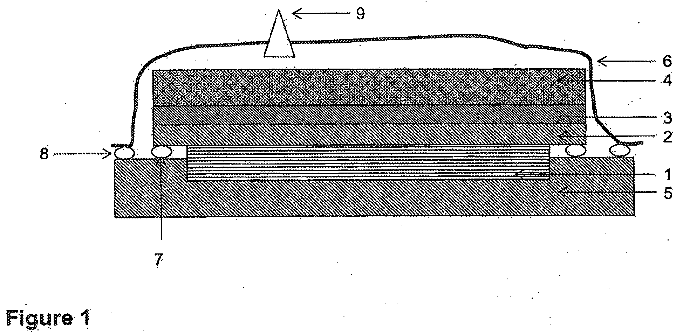

La figure 1 est une vue en coupe du complexe multicouche selon la présente invention, comprenant une membrane microporeuse associée à un tissu d'arrachage, et éventuellement à un feutre drainant. Le complexe multicouche est disposé sur une ébauche d'une pièce en matériau composite imprégné de la résine polymère située dans un moule.

### DESGRIPTION DETAILLEE DE L'INVENTION

Le procédé de fabrication d'une pièce en un matériau composite imprégné d'une résine polymère comprend plusieurs étapes.

Sur la figure 1, le renfort fibreux est un tissu de fibres de verre pré-imprégné d'une résine (ratio 70/30 par exemple). Il est placé dans un moule (5) de manière à former une ébauche (1) de la pièce en matériau composite imprégné de la résine polymère. Un cordon de joint ou mastic d'étanchéité (7) peut être placé autour de l'ébauche, de manière à isoler la zone du moule dans laquelle se trouve le renfort fibreux. Il est à noter que ce mastic d'étanchéité (7) est optionnel dans le cas où le complexe multicouche comprenant un tissu d'arrachage (2) associé à une membrane microporeuse (3) au moins perméable aux gaz, est mis en place de manière à totalement recouvrir l'ébauche.

Lorsqu'il n'est pas préalablement associé à la membrane (3), un feutre drainant (4) peut être avantageusement mis en place sur le complexe multicouche.

Un film de mise sous vide (6) est ensuite placé sur un mastic d'étanchéité (8), de manière à recouvrir le feutre drainant (4). Les gaz sont évacués par mise sous vide (9). L'évacuation des gaz est donc réalisée à travers la membrane microporeuse du complexe multicouche. Les gaz sont drainés par le feutre de drainage (4). En outre, la mise sous vide permet de répartir la résine uniformément au sein du renfort fibreux. Elle pénètre également le tissu d'arrachage (2).

La résine est ensuite réticulée à température ambiante ou élevée dans le cas des pré-imprégnés.

Après réticulation, le film de mise sous vide et le feutre drainant sont arrachés. Dans le cas particulier où le complexe multicouche comprend un feutre drainant associé à la membrane, le feutre drainant est arraché par délamination. la membrane et le tissu d'arrachage peuvent être maintenus sur la pièce en matériau composite comme film protecteur, puis retirés dans un deuxième temps pour des opérations secondaires.

### EXEMPLES DE REALISATION

Une pièce en matériau composite est réalisée à partir d'un renfort fibreux et d'une résine polymère (ratio 70/30).

Le renfort fibreux est un tissu de fibres de verre pré-imprégné de résine époxy.

Le complexe multicouche comprend une membrane microporeuse en PU ainsi qu'un tissu d'arrachage en polyamide (commercialisé par la société DIATEX sous la référence PA85) et présentant une épaisseur de 160 µm.

On peut utiliser une membrane microporeuse telle que commercialisée par la société PROLINE, à base de PU, qui présente une épaisseur de 55 µm et une densité de pores égale à 8 000 000 000 de pores/cm³. La membrane présente des pores dont le diamètre est compris entre 1 et 5 µm. En outre, elle est associée au tissu d'arrachage par points de colle PU. Les points de colle présentent un diamètre moyen de 0.6 mm, et couvent 25 % de la surface de la membrane. La membrane présente ainsi environ 90 points de colle par cm².

Le complexe multicouche est recouvert d'un feutre drainant en polyester de 3 mm d'épaisseur. Après installation du film de mise sous vide en polyamide, l'ébauche est mise sous vide, à 1 mbar abs pendant 120 minutes. La résine est ensuite réticulée à 120 °C pendant 30 minutes.

## Revendications

1. Complexe multicouche, pour le moulage sous vide d'une pièce en composite à base d'un renfort fibreux et d'une résine polymère, comprenant un tissu d'arrachage (2) associé à une membrane microporeuse (3) au moins perméable aux gaz, **caractérisé en ce que**
la membrane microporeuse présente une densité de pores comprise entre 2 milliards et 8 milliards de pores/cm³, le diamètre moyen des pores étant inférieur à 20 µm.

2. Complexe multicouche selon la revendication 1, ***caractérisé* en ce que** la membrane microporeuse est à base d'un polymère choisi dans le groupe comprenant les polyoléfines, les polyuréthanes, et les fluroropolymères.

3. Complexe multicouche selon l'une des revendications 1 à 2, ***caractérisé* en ce que** le diamètre moyen des pores de la membrane microporeuse est compris entre 1 et 20 µm, avantageusement entre 1 et 5 µm.

4. Complexe multicouche selon l'une des revendications 1 à 3, ***caractérisé* en ce que** la membrane microporeuse présente une épaisseur comprise entre 20 et 100 µm.

5. Complexe multicouche selon l'une des revendications 1 à 4, ***caractérisé* en ce que** la membrane microporeuse présente une perméabilité moyenne aux gaz supérieure à 1 L/m²/s sous 2000 Pa.

6. Complexe multicouche selon l'une des revendications 1 à 5, ***caractérisé* en ce que** la membrane microporeuse est associée avec le tissu d'arrachage par collage par points de colle.

7. Complexe multicouche selon l'une des revendications 1 à 6, ***caractérisé* en ce que** les points de colle sont positionnés de manière à ce que leur densité est de 30 à 180 points de colle par cm² de la surface de la membrane microporeuse, et à ce que la surface occupée par lesdits points de colle représente de 10 à 50 % de la surface de la membrane microporeuse.

8. Complexe multicouche selon l'une des revendications 1 à 7, ***caractérisé* en ce que** le tissu arrachage est à base de fibres de polyester, ou de polyamide.

9. Complexe multicouche selon l'une des revendications 1 à 8, ***caractérisé* en ce que** le complexe multicouche présente une épaisseur comprise entre 130 et 270 µm.

10. Complexe multicouche selon l'une des revendications 1 à .8, ***caractérise* en ce que** le complexe multicouche comprend un feutre drainant (4) venant en contact avec la membrane, et associé à la membrane par collage.

11. Procédé de fabrication par moulage sous vide d'une pièce en un matériau composite imprégné d'une résine polymère, comprenant les étapes suivantes
- formation dans un moule (5) de l'ébauche (1) de la pièce en matériau composite imprégné de la résine polymère, ladite ébauche comprenant un renfort fibreux et la résine ;
- mise en place d'un complexe multicouche comprenant un tissu d'arrachage (2) associé à une membrane microporeuse. (3) au moins perméable aux gaz, de manière à totalement recouvrir ladite ébauche,
- mise en place d'un film de mise sous vide (6), de manière à recouvrir le complexe multicouche ;
- mise en place d'un mastic d'étanchéité (8) entre le moule (5) et le film de mise sous vide (6) ;
- mise sous vide et évacuation des gaz compris entre le film de mise sous vide (6) et le moule (5) ;
- réticulation de la résine polymère ;
- retrait du film de mise sous vide (6);
- arrachage du complexe multicouche; **caractérisé en ce que** la membrane microporeuse présente une densité de pores comprise entre 2 milliards et 8 milliards de pores/cm³, le diamètre moyen des pores étant inférieur à 20 µm.

12. Procédé selon la revendication 11*, **cararactérisé*** en ce qu'il comprend une étape de mise en place d'un feutre drainant (4) sur le complexe multicouche, et une étape de retrait du feutre drainant

13. Procédé selon la revendication 11, ***caractérisé* en ce que** le complexe multicouche comprend un feutre drainant (4) associé à la membrane microporeuse (3) par collage par points de colle.

## Patentansprüche

1. Mehrschichtkomplex zur Vakuumformung eines Verbundteils auf Basis einer Faserverstärkung und eines Polymerharzes, ein Abreißgewebe (2) umfassend, das mit einer mikroporösen Membran (3) verbunden ist, die zumindest für Gas durchlässig ist, **dadurch gekennzeichnet, dass** die mikroporöse Membran eine Porendichte aufweist, die zwischen 2 Milliarden und 8 Milliarden Poren/cm³ beträgt, wobei der mittlere Porendurchmesser kleiner als 20 µm ist.

2. Mehrschichtkomplex nach Anspruch 1, **dadurch gekennzeichnet, dass** die mikroporöse Membran auf Basis eines Polymers ist, das aus der Gruppe ausgewählt ist, die Polyolefine, Polyurethane und Fluorpolymere umfasst.

3. Mehrschichtkomplex nach einem der Ansprüche 1 bis 2, **dadurch gekennzeichnet, dass** der mittlere Durchmesser der Poren der mikroporösen Membran zwischen 1 und 20 µm, vorteilhafter Weise zwischen 1 und 5 µm beträgt.

4. Mehrschichtkomplex nach einem der Ansprüche 1 bis 3, **dadurch gekennzeichnet, dass** die mikroporöse Membran eine Dicke aufweist, die zwischen 20 und 100 µm beträgt.

5. Mehrschichtkomplex nach einem der Ansprüche 1 bis 4, **dadurch gekennzeichnet, dass** die mikroporöse Membran eine mittlere Permeabilität für Gas von über 1 L/m²/s unter 2000 Pa aufweist.

6. Mehrschichtkomplex nach einem der Ansprüche 1 bis 5, **dadurch gekennzeichnet, dass** die mikroporöse Membran mit dem Abreißgewebe durch Verkleben über Klebepunkte verbunden ist.

7. Mehrschichtkomplex nach einem der Ansprüche 1 bis 6, **dadurch gekennzeichnet, dass** die Klebepunkte so angeordnet sind, dass ihre Dichte 30 bis 180 Klebepunkte pro cm² der Oberfläche der mikroporösen Membran beträgt, und dass die von den Klebepunkten eingenommene Fläche 10 bis 50% der Oberfläche der mikroporösen Membran darstellt.

8. Mehrschichtkomplex nach einem der Ansprüche 1 bis 7, **dadurch gekennzeichnet, dass** das Abreißgewebe auf Basis von Polyester- oder Polyamidfasern ist.

9. Mehrschichtkomplex nach einem der Ansprüche 1 bis 8, **dadurch gekennzeichnet, dass** der Mehrschichtkomplex eine Dicke zwischen 130 und 270 µm aufweist.

10. Mehrschichtkomplex nach einem der Ansprüche 1 bis 8, **dadurch gekennzeichnet, dass** der Mehrschichtkomplex einen Drainagefilz (4) umfasst, der mit der Membran in Kontakt kommt und durch Verkleben mit der Membran verbunden ist.

11. Verfahren zur Herstellung eines Teils aus einem mit einem Polymerharz getränkten Verbundstoff durch Vakuumformung, die folgenden Schritte umfassend:
- Ausbilden in einer Form (5) der Vorform (1) des Teils aus mit dem Polymerharz getränkten Verbundstoff, wobei die Vorform eine Faserverstärkung und Harz umfasst;
- Einsetzen eines Mehrschichtkomplexes, der ein Abreißgewebe (2) umfasst, das mit einer zumindest für Gas durchlässigen mikroporösen Membran (3) verbunden ist, und zwar so, dass die Vorform vollständig bedeckt wird;
- Einsetzen einer Vakuumbeaufschlagungsschicht (6), und zwar so, dass der Mehrschichtkomplex bedeckt wird;
- Einsetzen einer Klebedichtmasse (8) zwischen der Form (5) und der Vakuumbeaufschlagungsschicht (6);
- Vakuumbeaufschlagung und Ausleitung der zwischen der Vakuumbeaufschlagungsschicht (6) und der Form (5) enthaltenen Gase;
- Vernetzung des Polymerharzes;
- Entnahme der Vakuumbeaufschlagungsschicht (6);
- Abreißen des Mehrschichtkomplexes;
**dadurch gekennzeichnet, dass** die mikroporöse Membran eine Porendichte aufweist, die zwischen 2 Milliarden und 8 Milliarden Poren/cm³ beträgt, wobei der mittlere Porendurchmesser kleiner als 20 µm ist.

12. Verfahren nach Anspruch 11, **dadurch gekennzeichnet, dass** es einen Schritt des Anbringens eines Drainagefilzes (4) auf dem Mehrschichtkomplex und einen Schritt der Entnahme des Drainagefilzes umfasst.

13. Verfahren nach Anspruch 11, **dadurch gekennzeichnet, dass** der Mehrschichtkomplex einen Drainagefilz (4) umfasst, der mit der mikroporösen Membran (3) durch Verkleben über Klebepunkten verbunden ist.

## Claims

1. A multilayer complex for the vacuum molding of a composite part containing a fibrous reinforcement and a polymer resin, comprising a peel-ply fabric (2) combined with a microporous membrane (3) which is at least pervious to gases, ***characterized in that*** the microporous membrane has a pore density ranging between 2 billion and 8 billion pores/cm³, the average pore diameter being smaller than 20 µm.

2. The multilayer complex of claim 1, ***characterized in that*** the microporous membrane contains a polymer selected from the group comprising polyolefins, polyurethanes, and fluoropolymers.

3. The multilayer complex of any of claims 1 to 2, ***characterized in that*** the average pore diameter of the microporous membrane ranges between 1 and 20 µm, preferably between 1 and 5 µm.

4. The multilayer complex of any of claims 1 to 3, ***characterized in that*** the microporous membrane has a thickness ranging between 20 and 100 µm.

5. The multilayer complex of any of claims 1 to 4, ***characterized in that*** the microporous membrane has an average permeability of gases greater than1 L/m²/s under 2,000 Pa.

6. The multilayer complex of any of claims 1 to 5, ***characterized* in that** the microporous membrane is associated with the peel-ply fabric by gluing with glue dots.

7. The multilayer complex of any of claims 1 to 6, ***characterized in that*** the glue dots are positioned so that their density is from 30 to 180 glue dots per cm² of the surface area of the microporous membrane and **in that** the surface area occupied by said glue dots amounts to from 10 to 50 % of the surface area of the microporous membrane.

8. The multilayer complex of any of claims 1 to 7, ***characterized in that*** the peel-ply fabric is based on polyester or polyamide fibers.

9. The multilayer complex of any of claims 1 to 8, ***characterized in that*** the multilayer complex has a thickness ranging between 130 and 270 µm.

10. The multilayer complex of any of claims 1 to 8, ***characterized in that*** the multilayer complex comprises a bleeder felt (4) coming into contact with the membrane, and associated with the membrane by gluing.

11. A method for manufacturing by vacuum molding a part made of a composite material impregnated with a polymer resin, comprising the steps of:
- forming in a mold (5) the draft (1) of the part made of composite material impregnated with the polymer resin, said draft comprising a fibrous reinforcement and the resin;
- installing a multilayer complex comprising a peel-ply fabric (2) associated with a microporous membrane (3) at least pervious to gases, to totally cover said draft;
- installing a bagging film (6), to cover the multilayer complex;
- installing a sealant (8) between the mold (5) and the bagging film (6);
- placing under vacuum and discharging the gases present between the bagging film (6) and the mold (5);
- reticulating the polymer resin;
- removing the bagging film (6);
- peeling off the multilayer complex;
***characterized in that*** the microporous membrane has a pore density ranging between 2 billion and 8 billion pores/cm³, the average pore diameter being smaller than 20 µm.

12. The method of claim 11, ***characterized in that*** it comprises a step of installing a bleeder felt (4) on the multilayer complex and a step of removing the bleeder felt.

13. The method of claim 11, ***characterized in that*** the multilayer complex comprises a bleeder felt (4) associated with the microporous membrane (3) by gluing with glue dots.
